# EUROPEAN PATENT APPLICATION

(11) **EP 4 708 469 A1**
(43) Date of publication of application: **11.03.2026**
(21) Application number: 25177394.1
(22) Date of filing: 19.05.2025
(51) Int. Cl.: H01M 50/103, H01M 50/15, H01M 50/176, H01M 50/528, H01M 50/533, H01M 50/536, H01M 50/538, H01M 50/54, H01M 50/55, H01M 50/553, H01M 50/566

(54) **SECONDARY BATTERY AND METHOD FOR MANUFACTURING SAME**

(30) Priority: 05.09.2024 KR 20240120582
(71) Applicant: SAMSUNG SDI CO., LTD., Yongin-si, Gyeonggi-do 17084 (KR)
(72) Inventor: KIM, Hyeokjoo, 17084 Yongin-Si (KR); YOO, Seungyeol, 17084 Yongin-si (KR); KIM, Heonhee, 17084 Yongin-si (KR); KIM, Duckhyun, 17084 Yongin-si (KR); JANG, Woonsuk, 17084 Yongin-si (KR)
(74) Representative: Marks & Clerk LLP

(57) **Abstract**

A secondary battery includes an electrode assembly, the electrode assembly including a plurality of stacked electrode tabs, a case with an open side, the case accommodating the electrode assembly therein, a cap assembly sealing the open side of the case, the cap assembly comprising an electrode hole, and a current collecting plate connected to the plurality of stacked electrode tabs, the current collecting plate being inserted into and passing through the electrode hole.

## Description

### BACKGROUND

### 1. Field

The present disclosure relates to a secondary battery and a method for manufacturing the same.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage).

The above information disclosed in this Background section is for enhancement of understanding of the background of the present disclosure, and therefore, it may contain information that does not constitute related (or prior) art.

### SUMMARY

Embodiments include a secondary battery, the secondary battery including an electrode assembly, the electrode assembly including a plurality of stacked electrode tabs, a case with an open side, the case accommodating the electrode assembly therein, a cap assembly sealing the open side of the case, the cap assembly comprising an electrode hole, and a current collecting plate connected to the plurality of stacked electrode tabs, the current collecting plate being inserted into and passing through the electrode hole.

The plurality of stacked electrode tabs may have a first bend in a first direction, the plurality of stacked electrode tabs being connected to the current collecting plate.

At least one of the plurality of stacked electrode tabs may have a second bend in a second direction different from the first direction, the at least one of the plurality of stacked electrode tabs being connected to the current collecting plate.

The current collecting plate may include a welding portion connected to the plurality of stacked electrode tabs by welding, a bent portion, and a terminal portion inserted into the electrode hole and passing through the electrode hole, and wherein the welding portion is on the bent portion.

The bent portion may be bent in a direction perpendicular to a stacking direction of the electrode assembly.

An end of the welding portion may be spaced apart from a side of the cap assembly.

The welding portion may be parallel to a stacking direction of the electrode assembly.

The bent portion may include a notch on a surface of the current collecting plate opposite to a surface on which the welding portion is formed.

The notch may extend in a width direction of the current collecting plate.

The terminal portion may pass through the electrode hole, the terminal portion being connected to an external terminal.

The cap assembly may include a cap plate sealing a side of the case, an electrode hole on the cap plate, and an insulating member interposed between the electrode hole and the current collecting plate.

The insulating member may be injection molded and bonded between the electrode hole and the current collecting plate.

The cap assembly may further include an electrolyte injection port on the cap plate, and a vent hole on the cap plate.

Embodiments include a method for manufacturing a secondary battery, the method including bending a plurality of stacked electrode tabs of an electrode assembly, connecting a cap assembly and a current collecting plate by inserting a terminal portion of the current collecting plate into an electrode hole on the cap assembly, connecting the plurality of stacked electrode tabs and the current collecting plate, bending the current collecting plate in a direction perpendicular to a direction in which an electrode assembly is stacked, accommodating the electrode assembly in a case having an open side, and sealing the cap assembly to the open side of the case.

The bending of the plurality of electrode tabs may include firstly bending the plurality of stacked electrode tabs in a first direction in which the electrode assembly is stacked, and bending the current collecting plate includes bending the current collecting plate in a second direction perpendicular to the first direction.

Connecting the cap assembly and the current collecting plate may include bonding the electrode hole and the current collecting plate by injection-molding an insulating member between the terminal portion of the current collecting plate and the electrode hole of the cap assembly.

Connecting the electrode tabs and the current collecting plate may include forming a welding portion parallel to the direction in which the electrode assembly is stacked.

Connecting the electrode tabs and the current collecting plate may include forming a welding portion spaced apart from a side of the cap assembly.

Bending the current collecting plate may include bending a bent portion having a notch, and the notch may extend in a width direction of the current collecting plate, the notch being formed on a surface of the current collecting plate that is opposite to the other surface on which the welding portion is formed.

Connecting the electrode tabs and the current collecting plate may include connecting, at the bent portion, the electrode tabs and the welding portion of the current collecting plate by welding with a lower welding output than in other regions of the welding portion.

At least some of the above and other features of the invention are set out in the claims.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.

Features will become apparent to those of ordinary skill in the art by describing in detail embodiments with reference to the attached drawings, in which:
FIG. 1 is a perspective view illustrating a secondary battery according to one or more embodiments of the present disclosure;
FIG. 2 is a cross-sectional view illustrating a cross-section of the secondary battery according to one or more embodiments of the present disclosure;
FIG. 3 is an enlarged view of region A of FIG. 2;
FIG. 4 is an exploded view illustrating a current collecting plate and a cap assembly according to one or more embodiments of the present disclosure;
FIG. 5 is a diagram illustrating an electrode assembly according to one or more embodiments of the present disclosure;
FIG. 6 is a diagram illustrating an electrode assembly and a current collecting plate according to one or more embodiments of the present disclosure;
FIG. 7 is a diagram illustrating a connection relationship between the electrode tab and the current collecting plate according to one or more embodiments of the present disclosure when viewed from above;
FIG. 8 is a diagram illustrating a cross-section of FIG. 7 in the X-axis direction;
FIG. 9 is an enlarged view of region B of FIG. 8;
FIG. 10 is a diagram illustrating a comparative example of the connection relationship between the electrode tab and the current collecting plate;
FIG. 11 is a diagram illustrating a structure in which a bent portion of the current collecting plate is bent according to one or more embodiments of the present disclosure;
FIG. 12 is a flowchart illustrating a method for manufacturing the secondary battery according to one or more embodiments of the present disclosure; and
FIG. 13 to FIG. 16 are diagrams illustrating a series of processes of the method for manufacturing the secondary battery according to one or more embodiments of the present disclosure.

### DETAILED DESCRIPTION

Example embodiments will now be described more fully hereinafter with reference to the accompanying drawings; however, they may be embodied in different forms and should not be construed as limited to one or more embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her embodiments in the best way.

The embodiments described in this specification and the configurations shown in the drawings are only some of the embodiments of the present disclosure and do not represent all of the technical aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

**In** the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

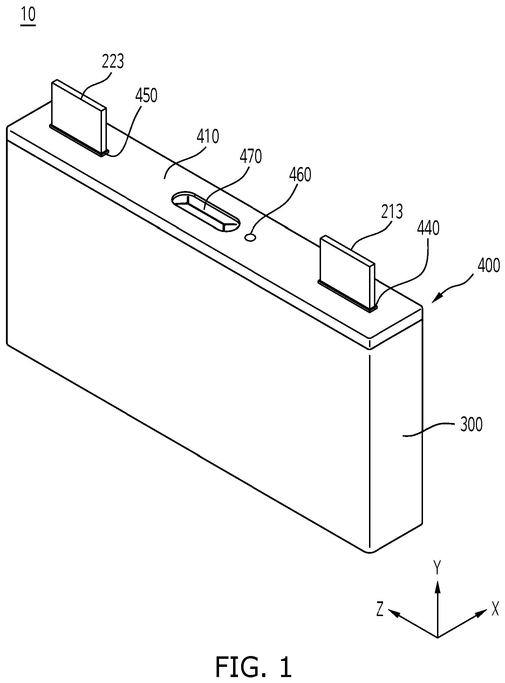

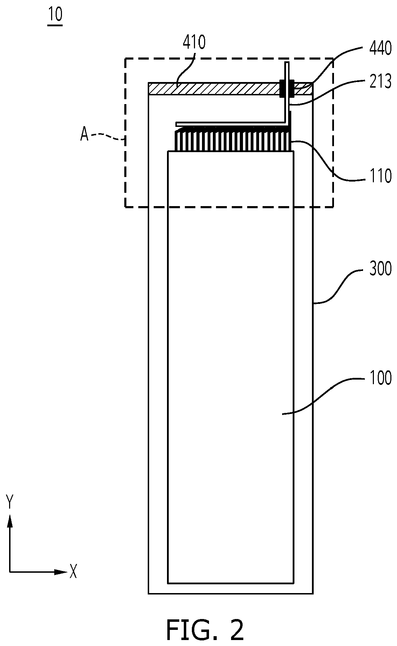

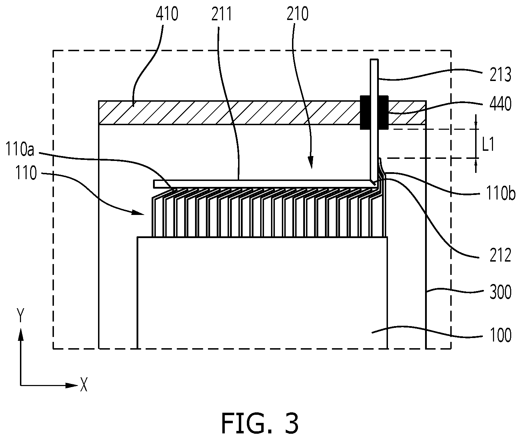

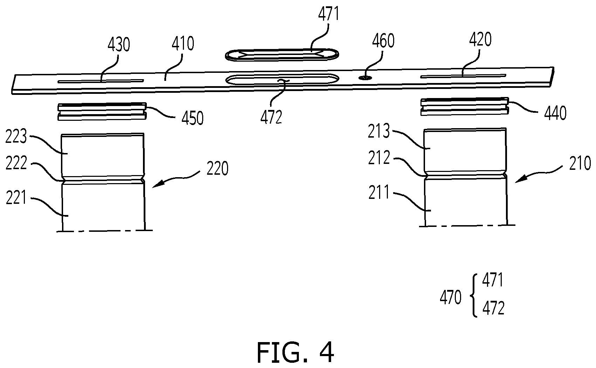

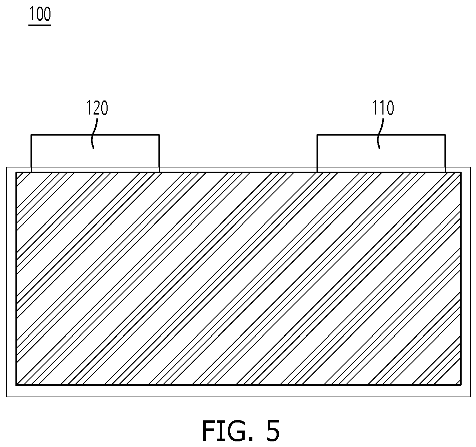

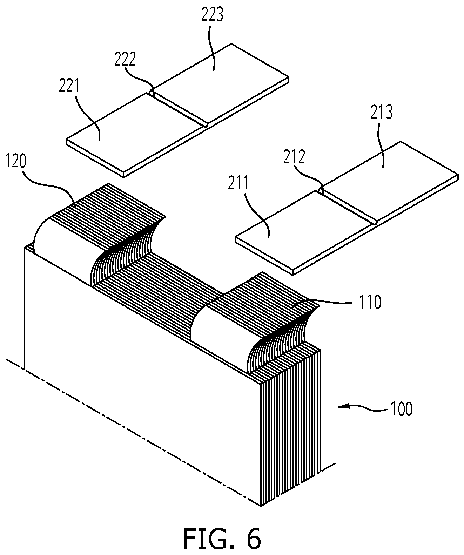

FIG. 1 is a perspective view illustrating a secondary battery according to an embodiment of the present disclosure. FIG. 2 is a cross-sectional view illustrating a cross-section of the secondary battery according to an embodiment of the present disclosure. FIG. 3 is an enlarged view of a region A of FIG. 2. FIG. 4 is an exploded view illustrating a current collecting plate and a cap assembly according to an embodiment of the present disclosure. FIG. 5 is a diagram illustrating an electrode assembly according to an embodiment of the present disclosure. FIG. 6 is a diagram illustrating an electrode assembly and a current collecting plate according to an embodiment of the present disclosure.

Referring to FIG. 1 to FIG. 6, the secondary battery 10 according to one or more embodiments of the present disclosure may include an electrode assembly 100, current collecting plates 210 and 220, a case 300, and a cap assembly 400.

The electrode assembly 100 may be accommodated inside the case 300. The electrode assembly 100 may be formed by alternately stacking a plurality of first electrodes, a separator, and a plurality of second electrodes which are formed in a thin plate shape or a film shape.

The electrode assembly 100 may have a stack type, and a shape of the electrode assembly 100 may be varied. The electrode assembly 100 may include a first electrode tab 110 and a second electrode tab 120. The electrode assembly 100 may be a Z-stack electrode assembly 100 in which a first electrode and a second electrode are inserted on both sides of a separator folded into a Z-stack. In the electrode assembly 100, the first electrode may serve as an anode, and the second electrode may serve as a cathode. In some embodiments, the opposite may also be possible.

The first electrode may be formed by applying a first electrode active material, such as a transition metal oxide, to a first electrode body formed of a metal foil, such as aluminum or an aluminum alloy, and may include a first electrode tab 110 (or a first uncoated portion, which is a region where the first electrode active material is not applied). The first electrode tab 110 may be a passage for a current flow between the first electrode and the first current collecting plate 210. In some embodiments, the first electrode tab 110 may be formed by cutting the first electrode tab 110 in advance to protrude toward the other side when manufacturing the first electrode, and may protrude toward the other side further than the separator without separate cutting. In a case of stacking a plurality of first electrodes, a plurality of first electrode tabs 110 may be stacked.

The second electrode may be formed by applying a second electrode active material, such as graphite or carbon, to a second electrode body formed of a metal foil, such as copper, a copper alloy, nickel or a nickel alloy, and may include a second electrode tab 120 (or a second uncoated portion, which is a region where the second electrode active material is not applied). The second electrode tab 120 may be a passage for a current flow between the second electrode and the second current collecting plate 220. In some embodiments, the second electrode tab 120 may be formed by cutting the second electrode tab 120 in advance to protrude toward a side when manufacturing the second electrode, and may protrude toward a side further than the separator without separate cutting. In a case of stacking a plurality of second electrodes, a plurality of second electrode tabs 120 may be stacked.

The separator may prevent a short circuit between the first electrode and the second electrode while allowing movement of lithium ions. The separator may be formed of a polyethylene film, a polypropylene film, a polyethylene-polypropylene film, or the like, but may vary.

A plurality of stacked first electrode tabs 110 and a plurality of stacked second electrode tabs 120 may be provided at an upper portion (in the orientation shown) of the electrode assembly 100 to be spaced apart from each other. Here, the upper portion may be set based on the secondary battery 10 illustrated in FIG. 2 for convenience of explanation, and a position of the upper portion may be changed in a case where the secondary battery 10 rotates left and right or up and down.

The plurality of first electrode tabs 110 may be firstly bent in a direction (an X-axis direction as shown), and may be connected to the first current collecting plate 210. A first direction in which the plurality of first electrode tabs 110 are firstly bent may be a direction in which the electrode assembly 100 is stacked (the X-axis direction as shown). The plurality of first electrode tabs 110a that are firstly bent may be connected to the first current collecting plate 210 which is disposed to be parallel to the stacking direction (the X-axis direction) of the electrode assembly.

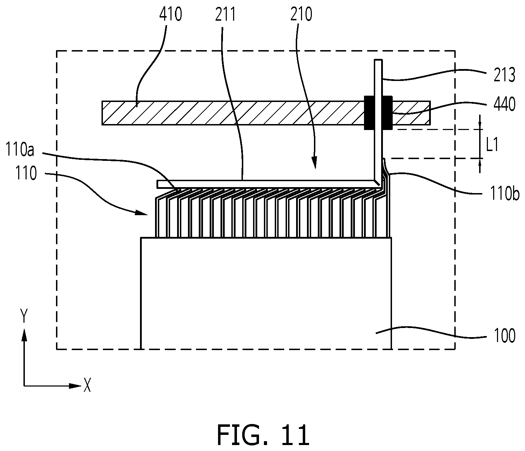

In a case where the plurality of first electrode tabs 110 are firstly bent, some of the plurality of first electrode tabs 110 may protrude from the electrode assembly 100. For example, in a case of an electrode tab 110b (see FIG. 3), which is disposed around a corner formed by an upper surface and a side surface of the electrode assembly 100, among the plurality of stacked first electrode tabs 110, the electrode tab 110b may protrude from the electrode assembly 100 during a process in which the plurality of first electrode tabs 110 are firstly bent. At least one of the plurality of first electrode tabs 110a which are firstly bent, for example, the electrode tab 110b protruding from the electrode assembly 100, may be further secondly bent in a second direction (a Y-axis direction) different from a first bending direction (the first direction or the X-axis direction), and may be connected to the first current collecting plate 210. In a case where the first current collecting plate 210 is bent in a direction (a Y-axis direction) perpendicular to the direction in which the electrode assembly 100 is stacked (the X-axis direction), the electrode tab 110b connected to a bent portion of the first current collecting plate 210 may be further secondly bent along the bending of the first current collecting plate 210. In this regard, FIG. 11 and related drawings may be referred to.

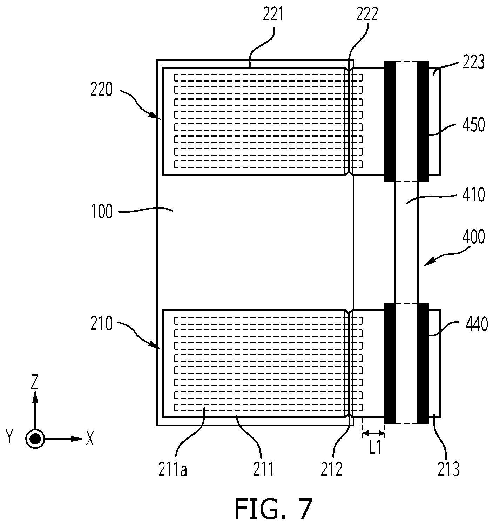

The current collecting plates 210 and 220 (see FIG. 7) may be respectively connected to the plurality of electrode tabs 110 and 120. Further, the current collecting plates 210 and 220 may be respectively inserted into electrode holes 420 and 430 (see FIG. 4) to respectively pass through the electrode holes 420 and 430. The current collecting plates 210 and 220 may include a first current collecting plate 210 and a second current collecting plate 220.

The first current collecting plate 210 may include a first horizontal portion 211, a first bent portion 212, and a first vertical portion 213 (see FIG. 3).

The first bent portion 212 may correspond to a bent portion of the first current collecting plate 210. A portion of the first current collecting plate 210 may be bent in a direction (Y-axis direction) perpendicular to the direction in which the electrode assembly 100 is stacked (the X-axis direction) by the first bent portion 212. By the bending of the first bent portion 212, the first current collecting plate 210 may be divided into the first horizontal portion 211 parallel to the stacking direction (the X-axis direction) of the electrode assembly 100 and the first vertical portion 213 perpendicular to the stacking direction (the X-axis direction) of the electrode assembly 100.

A first terminal portion 213 of the first current collecting plate 210 may correspond to the first vertical portion 213 of the first current collecting plate 210. The first terminal portion 213 may be electrically connected to the first electrode tab 110. Further, the first terminal portion 213 may be inserted into the first electrode hole 420 (see FIG. 4) to pass through the first electrode hole 420. The first terminal portion 213 may be inserted into the first electrode hole 420 formed on a cap plate 410 to pass through the first electrode hole 420. Thereby, the first terminal portion 213 may be connected to an external terminal. A first insulating member 440 may be interposed between the first terminal portion 213 and the first electrode hole 420 (see FIG. 4), and thus, a short circuit between the first terminal portion 213 and the cap plate 410 may be prevented.

A first welding portion of the first current collecting plate 210 may be formed across the first horizontal portion 211, the first bent portion 212, and the first vertical portion 213. The first welding portion may correspond to a portion at which the first electrode tab 110 and the first current collecting plate 210 are bonded to each other by welding. For example, the first welding portion may correspond to a welding line (211a, refer to FIG. 7).

The second current collecting plate 220 may include a second horizontal portion 221, a second bent portion 222, and a second vertical portion 223. The second current collecting plate 220 may correspond to the configuration of the first current collecting plate 210. For example, configurations of the second horizontal portion 221, the second bent portion 222, and the second vertical portion 213 may respectively correspond to the configurations of the first horizontal portion 211, the first bent portion 212, and the first vertical portion 213.

Since the plurality of second electrode tabs 120 and the second current collecting plate 220 may correspond to a structure symmetrical to the plurality of first electrode tabs 110 and the first current collecting plate 210, a description for specific configurations and connection relationships of the plurality of second electrode tabs 120 and the second current collecting plate 220 will be omitted below.

The case 300 may have an open side, and may accommodate the electrode assembly 100. The case 300 may form the overall appearance of the secondary battery 10. The case 300 may be formed of a conductive metal such as aluminum, aluminum alloy, or nickel-plated steel. In other embodiments, the case 300 may be formed of stainless steel (SUS), for example.

The cap assembly 400 may seal an open side of the case. The cap assembly 400 may include a cap plate 410, electrode holes 420 and 430, insulating members 440 and 450, an electrolyte injection port 460, and a vent portion 470 (see FIG. 1).

The cap plate 410 may be connected to the case 300 by welding. The cap plate 410 may seal an open side of the case 300. A first electrode hole 420, a second electrode hole 430, an electrolyte injection port 460, and a vent hole 472 may be formed on the cap plate 410 (see FIG. 4).

The electrode holes 420 and 430 may be formed on the cap plate 410. The electrode holes 420 and 430 may include a first electrode hole 420 and a second electrode hole 430. The first terminal portion 213 of the first current collecting plate 210 may be inserted into the first electrode hole 420 to pass through the first electrode hole 420. The first insulating member 440 may be interposed between the first electrode hole 420 and the first terminal portion 213. The second terminal portion 223 of the second current collecting plate 220 may be inserted into the second electrode hole 430 to pass through the second electrode hole 430. The second insulating member 450 may be interposed between the second electrode hole 430 and the second terminal portion 223. See FIGS. 4 and 7.

The insulating members 440 and 450 may include a first insulating member 440 and a second insulating member 450. The first insulating member 440 may be interposed between the first electrode hole 420 and the first current collecting plate 210. The first insulating member 440 may be formed by injection molding, and may be bonded between the cap plate 410 and the first current collecting plate 210. For example, the first insulating member 440 may be formed by insert molding, and may not be limited thereto. The second insulating member 450 may be interposed between the second electrode hole 430 and the second current collecting plate 220. The second insulating member 450 may be formed by injection molding, and may be bonded between the cap plate 410 and the second current collecting plate 220. For example, the second insulating member 450 may be formed by insert molding.

The electrolyte injection port 460 may be formed on the cap plate 410. Electrolyte may be injected into the case 300 through the electrolyte injection port 460. In FIG. 1, the electrolyte injection port 460 is illustrated as being formed on the cap plate 410, but the location may vary. After electrolyte injection is completed, the electrolyte injection port 460 may be sealed using sealing means such as a plug.

The vent portion 470 may be formed on the cap plate 410. The vent portion 470 may be formed by combining a vent member 471 into a vent hole 472 formed on the cap plate 410 (see FIG. 4). The vent portion 470 may prevent an explosion of the secondary battery 10 or prevent a chain heating reaction of the secondary batteries 10 arranged to be close to each other. For example, the vent portion 470 may be configured to be opened in a case where an internal pressure of the secondary battery 10 exceeds a predetermined threshold pressure. The threshold pressure may be set to a different value depending on the application field, the material, the purpose, or the like of the secondary battery 10. As another example, the vent portion 470 may be configured to be opened in a case where an internal temperature exceeds a predetermined threshold temperature.

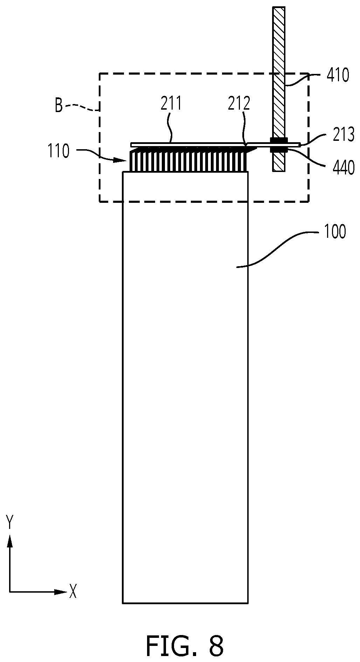

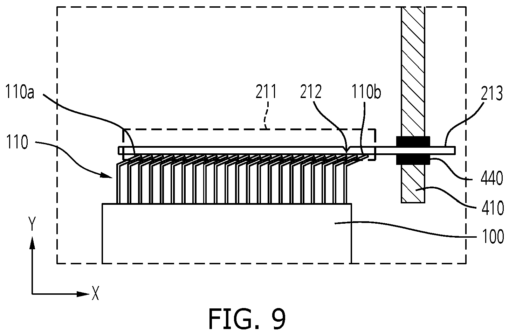

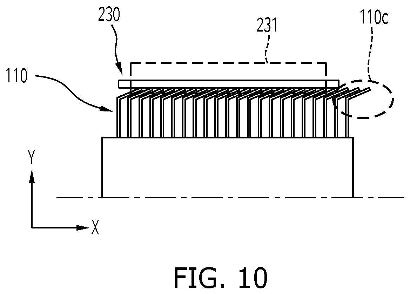

FIG. 7 is a diagram illustrating a connection relationship between the electrode tab and the current collecting plate according to an embodiment of the present disclosure when viewed from above. FIG. 8 is a diagram illustrating a cross-section of FIG. 7 in the X-axis direction. FIG. 9 is an enlarged view of a region B of FIG. 8. FIG. 10 is a diagram illustrating a comparative example of the connection relationship between the electrode tab and the current collecting plate. FIG. 11 is a diagram illustrating a structure in which a bent portion of the current collecting plate is bent according to an embodiment of the present disclosure.

FIG. 7 to FIG. 9 are diagrams for explaining a specific method of connecting the first current collecting plate and the plurality of first electrode tabs 110 by welding according to one or more embodiments of the present disclosure, and illustrate the structure before the first current collecting plate 210 is bent.

Referring to FIG. 7 to FIG. 9, the first current collecting plate 210 according to one or more embodiments of the present disclosure may be connected to the plurality of first electrode tabs 110. The second current collecting plate 220 may be connected to the plurality of second electrode tabs 120 (see to FIG. 6). The plurality of first electrode tabs 110 and the plurality of second electrode tabs 120 may be disposed to be spaced apart from each other. The first current collecting plate 210 and the second current collecting plate 220 may be respectively connected to the plurality of first electrode tabs 110 and the plurality of second electrode tabs 120. In the present embodiment, the first electrode tab 110 and the second electrode tab 120 may be symmetrical to each other and have the same structure, and the first current collecting plate 210 and the second current collecting plate 220 may be symmetrical to each other and have the same structure. Therefore, for convenience of explanation, the description will be given focusing on the first electrode tab 110 and the first current collecting plate 210.

The first welding portion 211a may be connected to the plurality of first electrode tabs 110 by welding (see FIG. 7). The first welding portion 211a may be formed across the first horizontal portion 211, the first bent portion 212, and the first vertical portion 213. The first welding portion 211a may be repeatedly formed in a stripe shape to be parallel to the stacking direction (the X-axis direction) of the electrode assembly. The first welding portion 211a may be formed on the first bent portion 212. For example, the first welding portion 211a may be formed to extend in the X-axis direction on a lower surface of the first current collecting plate 210, and the first bent portion 212, such as a notch, may be formed to extend in a Z-axis direction on an upper surface of the first current collecting plate 210. The first welding portion 211a may be formed to intersect with the first bent portion 212 on surfaces different from each other, and the first welded portion 211a may be formed on the first bent portion 212.

Most of the first welding portion 211a may be formed in the first horizontal portion 211, and an end of the first welding portion 211a may be formed in the first vertical portion 213 (see FIG. 7). For example, 80% of the first welding portion 211a may be formed in the first horizontal portion 211, and 20% of the first welding portion 211a may be formed in the first vertical portion 213. For example, 90% of the first welding portion 211a may be formed in the first horizontal portion 211, and 10% of the first welding portion 211a may be formed in the first vertical portion 213. For example, 95% of the first welding portion 211a may be formed in the first horizontal portion 211, and 5% of the first welding portion 211a may be formed in the first vertical portion 213. Thereby, the plurality of electrode tabs 110 may be bonded to the first current collecting plate 210 by welding through the first welding portion 211a across the first horizontal portion 211, the first bent portion 212, and the first vertical portion 213.

The electrode tab 110a of the electrode assembly 100 that is bonded to the first welding portion 211a formed in the first horizontal portion 211 by welding may maintain a first bent state (see FIG. 9). The electrode tab 110b of the electrode assembly 100 that is bonded to the first vertical portion 213 by welding may be further bent by the bending of the first bent portion 212 after being firstly bent. Thus, the electrode tab 110b may be in a second bent state.

The first welding portion 211a may correspond to a portion at which the first current collecting plate 210 and the first electrode tab 110 are bonded to each other by welding. The first electrode tab 110a that is firstly bent and the first electrode tab 110b that is secondly bent may be connected to the first welding portion 211a by welding.

An end of the first welding portion 211a may be formed in the first vertical portion 213 (see FIG. 7). An end of the first welding portion 211a that is formed in the first vertical portion 213 may be disposed to be spaced apart from a side of the cap assembly 400. For example, an end of the first welding portion 211a that is bent may be disposed to be spaced apart from a side of the cap assembly 400, for example, the first insulating member 440, by a predetermined distance L1. This is to secure a welding margin distance of a predetermined distance L1 such that the cap assembly 400 or the first insulating member 440 is not damaged by welding during a process of welding the first welding portion 211a and the plurality of first electrode tabs 110.

The first welding portion 211a may be connected to the plurality of first electrode tabs 110 by performing laser welding multiple times in the X-axis direction. By performing laser welding along a plurality of welding lines which are provided to be spaced apart from each other and to be parallel to the X-axis direction, the first welding portion 211a and the plurality of first electrode tabs 110 may be connected by the welding. A region of the first welding portion 211a that is formed on the first bent portion 212 on which the notch is formed may be thinner than another region on which the notch is not formed. Thereby, in a region overlapping with the first bent portion 212 on which the notch is formed, the first welding portion 211a and the plurality of first electrode tabs 110 may be connected by welding with a lower welding output than in other regions.

The first bent portion 212 may include a notch that is formed to extend in a width direction of the first current collecting plate 210. The notch may be formed on a surface of the first current collecting plate 210 that is opposite to a surface on which the first welding portion 211a is formed. The plurality of first electrode tabs 110 and the first current collecting plate 210 may be bonded at the first welding portion 211a. The first current collecting plate 210 may be easily bent in a vertical direction (the Y-axis direction) by the notch that is formed by the first bent portion 212. The first current collecting plate 210 may be formed to be longer than a length of the electrode assembly 100 in the width direction (the X-axis direction). The first current collecting plate 210 may be bent by the first bent portion 212. Thus, the first current collecting plate 210 may be disposed inside the case 300 even in a case where the first current collecting plate 210 has a long length.

Referring to FIG. 10, the first current collecting plate 230 according to a comparative example may be formed to have a length equal to or shorter than the length of the electrode assembly in the width direction (the X-axis direction). Since the first current collecting plate 230 has a shorter length in the width direction, some first electrode tabs 110c among the plurality of first electrode tabs 110 may not be connected to the first welding portion 231 by welding. In consideration of this, some first electrode tabs should not be formed for some of the first electrodes. Therefore, an additional process may be required not to form some of the first electrodes. In other embodiments, since it is necessary to form some first electrode tabs having a longer length and connect the some first electrode tabs to the first current collecting plate by welding so as to surround the first current collecting plate, an additional process may be required.

As compared with the comparative example, in the secondary battery 10 according to one or more embodiments of the present disclosure, the first current collecting plate 210 may be formed to be relatively long. Therefore, the plurality of first electrode tabs 110 that are bent apart from the upper surface of the electrode assembly 100 may be connected to the first current collecting plate 210 by welding, without an additional process. For example, the first current collecting plate 210 may be bent, and thus, the length of the current collecting plate may be made longer than the length of the electrode assembly in the width direction (the X-axis direction).

For example, referring to FIG. 11, the first current collecting plate 210 according to one or more embodiments of the present disclosure may be bent in the vertical direction (the Y-axis direction), which is perpendicular to the direction in which the electrode assembly 100 is stacked (the X-axis direction), by the first bent portion 212. In a case where the first current collecting plate 210 is bent by the first bent portion 212 (see FIG. 7), the first welding portion 211a formed in a region other than the first horizontal portion 211 of the first current collecting plate 210 may also be bent according to the bending of the first current collecting plate 210. As the first welding portion 211a is bent, the electrode tab 110b, which is weld-connected to the first welding portion 211a formed in a region other than the first horizontal portion 211, may also be further bent.

For example, an end of the first welding portion 211a that is formed in the first vertical portion 213 may be bent. As the first bent portion 212 is bent, an end of the first welding portion 211a that is formed in the first vertical portion 213 may also be bent. The electrode tab 110b may be connected to the first welding portion 211a, which is formed in the first vertical portion 213, by welding. Thereby, the electrode tab 110b connected to the first welding portion 211a formed in the first vertical portion 213 may also be bent according to the bending of the first welding portion 211a.

The plurality of first electrode tabs 110 may be connected to the first current collecting plate 210 by welding at the first welding portion 211a formed in the first horizontal portion 211, and the plurality of first electrode tabs 110 may also be connected to the first current collecting plate 210 by welding at the first welding portion 211a formed in the first vertical portion 213. An end of the first welding portion 211a that is formed in the first vertical portion 213 may be disposed to be spaced apart from a side of the cap assembly 400. For example, an end of the first welding portion 211a that is bent may be disposed to be spaced apart from a side of the cap assembly 400 by a predetermined distance L1 (see, e.g., FIG. 11). This is to secure a welding margin distance of a predetermined distance L1 such that the cap assembly 400 is not damaged by welding during a process of welding the first welding portion 211a and the plurality of first electrode tabs 110.

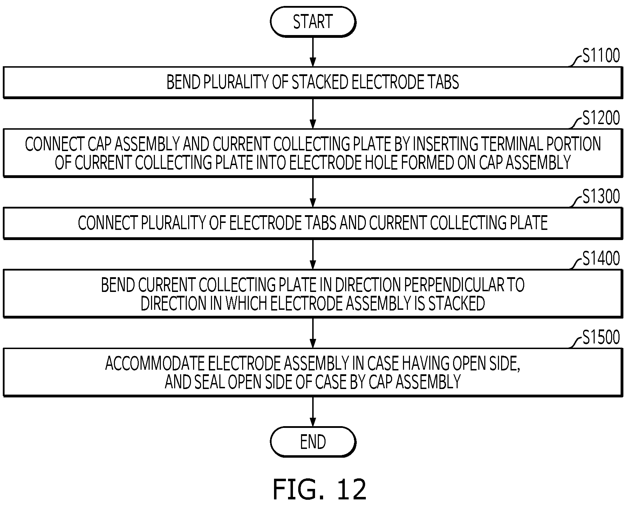

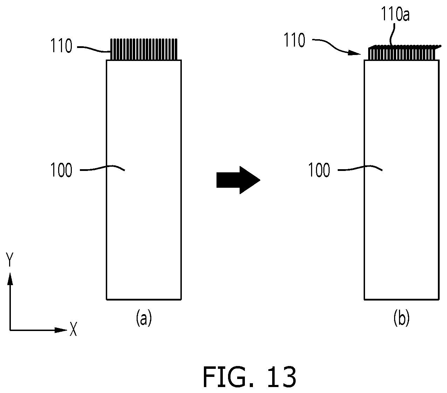

FIG. 12 is a flowchart illustrating a method for manufacturing the secondary battery according to an embodiment of the present disclosure. FIG. 13 to FIG. 16 are diagrams illustrating a series of processes of the method for manufacturing the secondary battery according to an embodiment of the present disclosure.

Hereinafter, each step of the method for manufacturing the secondary battery 10 according to one or more embodiments of the present disclosure will be described in detail with reference to FIG. 12 to FIG. 16. In the present embodiment, the first electrode tab 110 and the second electrode tab 120 may be symmetrical to each other and have the same structure, and the first current collecting plate 210 and the second current collecting plate 220 may be symmetrical to each other and have the same structure. Therefore, for convenience of explanation, the description will be given focusing on a right cross-sectional view of the secondary battery 10 in which the first electrode tab 110 and the first current collecting plate 210 are illustrated.

In step S1100 of FIG. 12, a plurality of stacked electrode tabs of the electrode assembly may be bent. The step of bending the plurality of electrode tabs may include a step of firstly bending the plurality of electrode tabs in a direction in which the electrode assembly is stacked.

Referring to FIG. 13, the electrode assembly 100 according to one or more embodiments of the present disclosure may include a first electrode tab (or a first uncoated portion) 110, which is a region on which a first electrode active material is not applied. In a case of stacking a plurality of first electrodes, a plurality of first electrode tabs 110 may be stacked. The plurality of first electrode tabs 110 may be firstly bent in a direction (the X-axis direction).

In step S1200 of FIG. 12, the terminal portion of the current collecting plate may be inserted into the electrode hole formed on the cap assembly to connect the cap assembly and the current collecting plate. The step of connecting the cap assembly and the current collecting plate may include a step of injection-molding an insulating member between the terminal portion of the current collecting plate and the electrode hole of the cap assembly to bond the electrode hole and the current collecting plate.

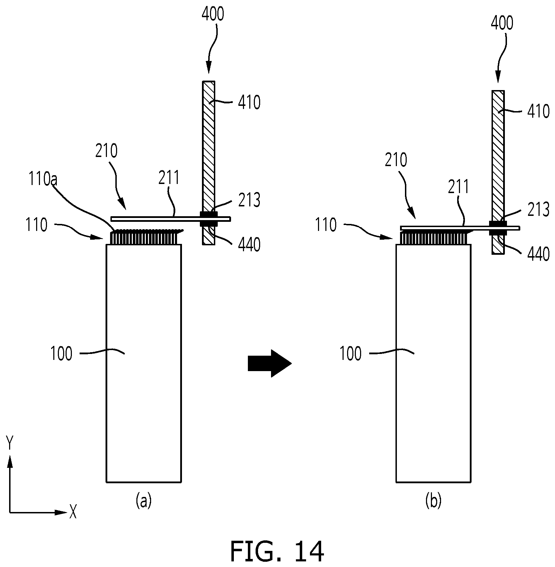

Referring to FIG. 14, the first terminal portion 213 of the first current collecting plate 210 according to one or more embodiments of the present disclosure may be inserted into the first electrode hole 420 (refer to FIG. 4) formed on the cap plate 410 to pass through the first electrode hole 420. Thereby, the first terminal portion 213 of the first current collecting plate 210 may be connected to the cap assembly 400. The first insulating member 440 may be interposed between the first electrode hole 420 and the first terminal portion 213. The first insulating member 440 may be formed by injection molding, and may be bonded between the cap assembly 400 and the first current collecting plate 210. For example, the first insulating member 440 may be formed by insert molding, and may not be limited thereto.

In step S1300 of FIG. 12, the electrode tab and the current collecting plate may be connected. The step of connecting the electrode tab and the current collecting plate may include a step of forming the welding portion parallel to the direction in which the electrode assembly is stacked and connecting the electrode tab and the current collecting plate, or a step of forming the welding portion spaced apart from a side of the cap assembly and connecting the electrode tab and the current collecting plate. The step of connecting the electrode tab and the current collecting plate may include a step of welding and connecting the electrode tab and the welding portion of the current collecting plate at the bent portion with a lower welding power than in other regions of the welding portion.

In step S1400 of FIG. 12, the current collecting plate may be bent in a direction perpendicular to the direction in which the electrode assembly is stacked.

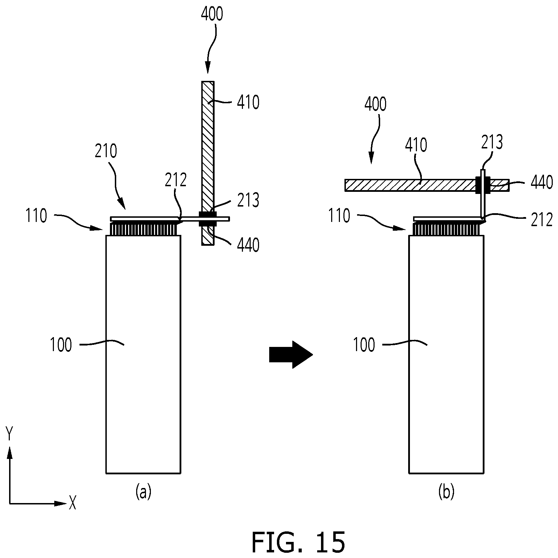

Referring to FIG. 14 and FIG. 15, the lower surface of the first current collecting plate 210 may be connected to the plurality of first electrode tabs 110a, which are firstly bent, by welding. The first welding portion may be formed on the lower surface of the first current collecting plate 210, and extend to be parallel to the stacking direction of the electrode assembly. The first welding portion may be formed to be spaced apart from a side of the cap assembly.

The first current collecting plate 210 may include the first horizontal portion 211, the first bent portion 212, and the first vertical portion 213. Most of the first electrode tabs 110a that are firstly bent may be bonded to the first horizontal portion 211 by welding, and the remaining part of the first electrode tabs 110a may be bonded to the first vertical portion 213 by welding. The first bent portion 212 may be formed between the first horizontal portion 211 and the first vertical portion 213. The first bent portion 212 may be bent in a direction (the Y-axis direction) perpendicular to the stacking direction (the X-axis direction) of the electrode assembly 100. The first bent portion 212 may include a notch. The notch may be formed to extend in the width direction of the current collecting plate, and may be formed on a surface of the current collecting plate that is opposite to a surface on which the welding portion is formed.

The first current collecting plate 210 may be formed to be longer than the length of the electrode assembly in the width direction (the X-axis direction). The first current collecting plate 210 may be connected to the plurality of first electrode tabs 110 in a state where the first current collecting plate 210 is connected to the cap assembly 400.

The plurality of first electrode tabs 110 may be connected to the first welding portion of the first current collecting plate 210 by welding. The connection by welding may be implemented, for example, by laser welding. The first welding portion may be formed to be parallel to the stacking direction (the X-axis direction) of the electrode assembly 100.

In step S1500 of FIG. 12, the electrode assembly may be accommodated in the case having an open side, and the open side of the case may be sealed by the cap assembly.

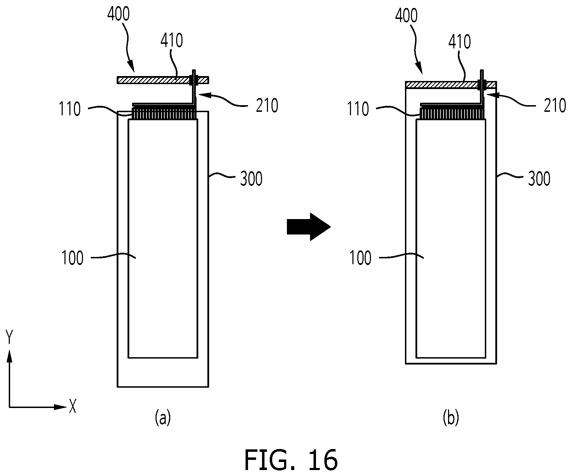

Referring to FIG. 16, the electrode assembly 100 may be inserted into the case 300 having an open side according to one or more embodiments of the present disclosure. After the electrode assembly 100 is accommodated in the case 300, the cap plate 410 of the cap assembly 400 and the case 300 may be connected to each other by welding. The cap plate 410 may be connected to the case 300 by welding to seal the open side of the case 300.

According to an embodiment of the present disclosure, it is possible to reduce quality problems occurring in a notching process.

Secondary batteries have a structure in which an electrode assembly is inside a case thereof. In the case of an electrode assembly in which a pair of uncoated portions or tabs are formed for electrodes, during a notching process, there is a problem that a process cost increases and a quality decreases. In some cases, in a process of connecting a tab to a current collecting plate, there is a problem that a resistance distribution varies depending on a region of an electrode plate, resulting in a degeneration difference between the electrode plates.

According to one or more embodiments of the present disclosure, components can be simplified, and a current path between an electrode and an external terminal can be shortened. Therefore, it is possible to reduce resistance of a battery.

According to one or more embodiments of the present disclosure, it is possible to connect electrode tabs and a current collecting plate by a single welding process without an additional process.

Although the present disclosure has been described above with respect to embodiments thereof, the present disclosure is not limited thereto. Various modifications and variations can be made thereto by those skilled in the art within the present disclosure and the equivalent scope of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

### <Description of Reference Symbols>

10: Secondary battery
100: Electrode assembly
110: First electrode tab
120: Second electrode tab
210: First current collecting plate
211: First horizontal portion
211a: First welding portion
212: First bent portion
213: First terminal portion
220: Second current collecting plate
221: Second horizontal portion
222: Second bent portion
223: Second terminal portion
300: Case
400: Cap assembly
410: Cap plate
420: First electrode hole
430: Second electrode hole
440: First insulating member
450: Second insulating member
460: Electrolyte injection port
470: Vent portion

## Claims

1. A secondary battery (10), comprising:
an electrode assembly (100) comprising a plurality of stacked electrode tabs (110);
a case (300) with an open side, the case (300) accommodating the electrode assembly (100) therein;
a cap assembly (400) sealing the open side of the case (300), the cap assembly (400) comprising an electrode hole (420); and
a current collecting plate (210) connected to the plurality of stacked electrode tabs (110), the current collecting plate (210) being inserted into and passing through the electrode hole (420).

2. The secondary battery (10) as claimed in claim 1, wherein the plurality of stacked electrode tabs (110a) have a first bend in a first direction, the plurality of stacked electrode tabs (110a) being connected to the current collecting plate (210).

3. The secondary battery (10) as claimed in claim 2, wherein at least one of the plurality of stacked electrode tabs (110b) has a second bend in a second direction different from the first direction, the at least one of the plurality of stacked electrode tabs (110b) being connected to the current collecting plate (210).

4. The secondary battery (10) as claimed in any one of the preceding claims, wherein the current collecting plate (210) comprises:
a welding portion (211a) connected to the plurality of stacked electrode tabs (110) by welding;
a bent portion (212); and
a terminal portion (213) inserted into the electrode hole (420) and passing through the electrode hole (420), and wherein the welding portion (211a) is on the bent portion(212).

5. The secondary battery (10) as claimed in claim 4, wherein the bent portion (212) is bent in a direction perpendicular to a stacking direction of the electrode assembly(100).

6. The secondary battery (10) as claimed in claim 5, wherein an end of the welding portion (211a) is spaced apart from a side of the cap assembly (400).

7. The secondary battery (10) as claimed in any one of claims 4 to 6, wherein the bent portion (212) comprises a notch on a surface of the current collecting plate (210) opposite to a surface on which the welding portion (211a) is formed.

8. The secondary battery (10) as claimed in claim 7, wherein the notch extends in a width direction of the current collecting plate (210).

9. The secondary battery (10) as claimed in any one of claims 4 to 8, wherein the terminal portion (213) passes through the electrode hole (420), the terminal portion (213) being connected to an external terminal.

10. The secondary battery (10) as claimed in any one of the preceding claims, wherein the cap assembly (400) comprises:
a cap plate (410) sealing a side of the case (300);
an electrode hole (420) on the cap plate (410); and
an insulating member (440) interposed between the electrode hole (420) and the current collecting plate (210).

11. A method for manufacturing a secondary battery (10), the method comprising:
bending a plurality of stacked electrode tabs (110) of an electrode assembly (100);
connecting a cap assembly (400) and a current collecting plate (210) by inserting a terminal portion (213) of the current collecting plate (210) into an electrode hole (420) on the cap assembly (400);
connecting the plurality of stacked electrode tabs (110) and the current collecting plate (210);
bending the current collecting plate (210) in a direction perpendicular to a direction in which an electrode assembly (100) is stacked; and
accommodating the electrode assembly (100) in a case (300) having an open side and sealing the cap assembly (400) to the open side of the case (300).

12. The method for manufacturing a secondary battery (10) as claimed in claim 11, wherein:
the bending of the plurality of electrode tabs (110) comprises firstly bending the plurality of stacked electrode tabs (110) in a first direction in which the electrode assembly (100) is stacked, and
bending the current collecting plate (210) comprises bending the current collecting plate (210) in a second direction perpendicular to the first direction.

13. The method for manufacturing a secondary battery (10) as claimed in claim 11 or claim 12, wherein connecting the electrode tabs (110) and the current collecting plate (210) comprises forming a welding portion (211a) spaced apart from a side of the cap assembly (400).

14. The method for manufacturing a secondary battery (10) as claimed in claim 13, wherein:
bending the current collecting plate (210) comprises bending a bent portion (212) having a notch, and
the notch is formed to extend in a width direction of the current collecting plate (210), and the notch is formed on a surface of the current collecting plate (210) that is opposite to the other surface on which the welding portion (211a) is formed.

15. The method for manufacturing a secondary battery (10) as claimed in claim 14, wherein connecting the electrode tabs (110) and the current collecting plate (210) comprises connecting, at the bent portion (212), the electrode tabs (110) and the welding portion (211a) of the current collecting plate (210) by welding with a lower welding output than in other regions of the welding portion.
